# EUROPEAN PATENT APPLICATION

(11) **EP 1 501 201 A1**
(43) Date of publication of application: **26.01.2005**
(21) Application number: 03445087.4
(22) Date of filing: 02.07.2003
(51) Int. Cl.: H04B 1/38

(54) **Mobile telephone with GPS receiver and control method therefor**

(71) Applicant: Sony Ericsson Mobile Communications AB, 221 88 Lund (SE)
(72) Inventor: Klinghult, Gunnar, SE-227 31 Lund (SE); Röjsel, Peter, SE-226 47 Lund (SE); Jendbro, Magnus, SE-224 73 Lund (SE); Hansson, Björn, SE-214 22 Malmö (SE)
(74) Representative: Akerman, Marten Lennart

(57) **Abstract**

The invention relates to a mobile telephone with a built-in GPS (Global Positioning System) receiver, and more particularly such a device with improved control of the clock reference supplied to the GPS receiver using the reference clock of the mobile telephone system together with the internal mobile telephone clock. The invention also relates to the corresponding control method. The mobile telephone comprises: a mobile telephone radio unit (1); a voltage controlled oscillator (3) for generating a clock signal to the mobile telephone radio unit; a baseband processor (2) arranged to extract a received clock reference from a base station of a mobile telephone system, to compare the received clock reference with the generated clock signal, and to generate a first control signal (a) to the voltage controlled oscillator (3) for adjusting the frequency thereof when the frequency of the generated clock signal deviates from the received clock reference by a certain amount; and a GPS radio unit (5, 6) adapted to receive the generated clock signal or a derivative of it as its clock reference. According to the invention the baseband processor (2) is arranged to supply a second control signal (b) to the GPS radio unit (5, 6) containing information about any frequency adjustments, e.g. time and magnitude of any change.

## Description

### Field of the invention

The present invention relates to a mobile telephone with a built-in GPS (Global Positioning System) receiver, and more particularly such a device with improved control of the clock reference supplied to the GPS receiver using the reference clock of the mobile telephone system together with the internal mobile telephone clock. The invention also relates to the corresponding control method.

### State of the art

Mobile telephones with integrated GPS receivers already exist on the market. The GPS receiver provides a positioning service to the mobile telephone user. To perform well the GPS receiver needs a stable clock. It has been proposed to use the internal mobile telephone clock, which is synchronised to the mobile telephone system base station clock. The mobile phone uses a voltage controlled oscillator (VCXO), which for various reasons is not completely stable and must be adjusted at intervals. However, this adjustment makes it awkward to use the VCXO signal directly as a clock for the GPS receiver. If the GPS receiver clock changes without notice it will result in that the GPS receiver looses the received signal and a new search has to be done to recover the information.

Postponing the VCXO clock adjustment to a time when the GPS receiver is not sensitive, such as between data acquisition operations, might be against the mobile telephone system standard. Thus, this is not a viable solution.

Another solution would be to use a separate temperature controlled crystal oscillator (TCXO) for the GPS but this would add cost and size, and could potentially cause spurious interference on certain mobile telephone frequency channels.

### Summary of the invention

One object of the invention is to use the mobile telephone internal clock also in the GPS receiver and permit frequency adjustments without disturbing the GPS receiver.

This object is achieved by signalling to the GPS beforehand about the timing and magnitude of the frequency adjustment. The signalling can be made as a direct signal to the GPS subprocessor or as a software signal e.g. if the GPS receiver shares the processor with the mobile telephone.

In a first aspect the invention provides a mobile telephone comprising:
a mobile telephone radio unit;
a voltage controlled oscillator for generating a clock signal to the mobile telephone radio unit;
a baseband processor arranged to extract a received clock reference from a base station of a mobile telephone system, to compare the received clock reference with the generated clock signal, and to generate a first control signal to the voltage controlled oscillator for adjusting the frequency thereof when the frequency of the generated clock signal deviates from the received clock reference by a certain amount;
a GPS radio unit adapted to receive the generated clock signal or a derivative of it as its clock reference.

According to the invention the baseband processor is arranged to supply a second control signal to the GPS radio unit containing information about any frequency adjustments, e.g. time and magnitude of any change.

Suitably, the second control signal is a digital signal supplied to a subprocessor of the GPS radio unit.

The first control signal may be a digital signal identical with the second control signal, and may be supplied to the voltage controlled oscillator via a digital/analog converter.

In one embodiment, the GPS radio unit share the baseband processor with the mobile telephone radio unit, and the second control signal is implemented as a software signal.

Suitably, the frequency adjustment of the GPS radio unit may be formed by means of a lookup table linking the second control signal to the resulting frequency adjustment of the GPS radio unit.

In a second aspect the invention provides a method of controlling a GPS radio unit incorporated in a mobile telephone comprising:
a mobile telephone radio unit;
a voltage controlled oscillator;
a baseband processor;
wherein the GPS radio unit is adapted to receive the generated clock signal or a derivative of it as its clock reference.

According to the invention, the method includes the steps of;
extracting a received clock reference from a base station of a mobile telephone system,
generating a clock signal by means of the voltage controlled oscillator and
supplying the clock signal to the mobile telephone radio unit and to the GPS radio unit,
comparing the received clock reference with the generated clock signal,
generating a first control signal to the voltage controlled oscillator for adjusting the frequency thereof when the frequency of the generated clock signal deviates from the received clock reference by a certain amount; and
supplying a second control signal to the GPS radio unit containing information about any frequency adjustments, e.g. time and magnitude of any change.

Suitably, the second control signal is a digital signal supplied to a subprocessor of the GPS radio unit.

The first control signal may be a digital signal identical with the second control signal, and may be supplied to the voltage controlled oscillator via a digital/analog converter.

In one embodiment, the GPS radio unit share the baseband processor with the mobile telephone radio unit, and the second control signal is implemented as a software signal.

Suitably, the frequency adjustment of the GPS radio unit may be formed by means of a lookup table linking the second control signal to the resulting frequency adjustment of the GPS radio unit.

The invention is defined in the attached claims 1 and 7, while preferred embodiments are set forth in the dependent claims.

### Brief description of the drawings

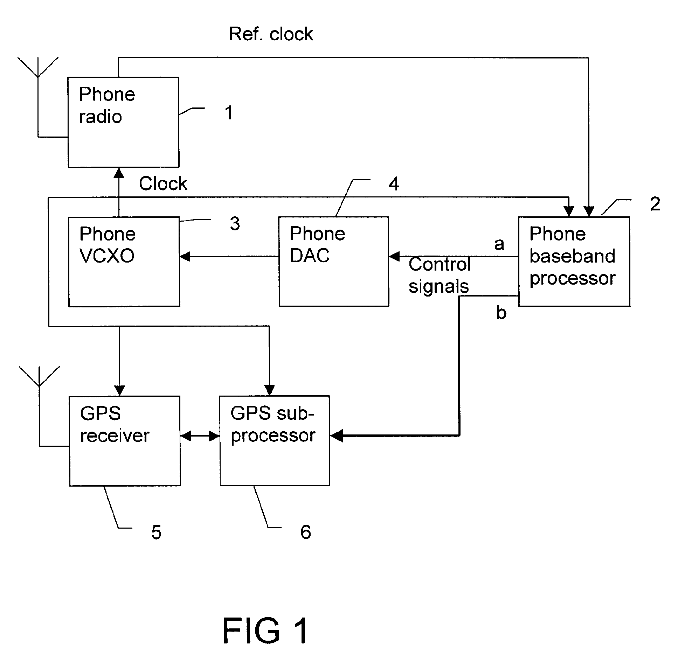

The invention will be described in detail below with reference to the accompanying drawings, in which the only fig. 1 is a schematic diagram of the functional blocks relevant to the present invention.

### Detailed description of preferred embodiments

A mobile telephone with a built-in GPS receiver has many useful applications, as will be readily appreciated by a person skilled in the art. For economic and technical reasons, the GPS unit should share components with a mobile telephone unit. The mobile telephones uses a voltage controlled crystal oscillator (VCXO) for providing a clock signal to the mobile telephone radio unit. If the phone VCXO can be re-used, the costs and the space required will be decreased. Also, the GPS unit may share the baseband processor of the mobile telephone.

The mobile telephone is connected to a mobile telephone communication system, such as GSM (Global System for Mobile Telecommunication) or UMTS (Universal Mobile Telecommunication System). The GPS unit is in turn connected to the global positioning system by means of its radio unit receiving signals from GPS satellites. The GPS unit performs acquisition of data from a satellite using cross-correlation of a spread spectrum signal. The correlation is made typically several times per second. By using the high accuracy of the GSM reference clock, the GPS performance will be increased significantly. Especially the time to first fix TTFF will decrease. A short TTFF is one of the most important parameters for the user experience. The GPS system uses a 1,5 GHz carrier wave frequency, but other positioning systems may use other frequencies.

Fig. 1 shows an exemplifying embodiment of the present invention, in which only blocks of the mobile phone relevant to the present invention are shown. The device comprises a mobile telephone radio 1 receiving a reference clock at e.g. 13 MHz from the GSM base station. The mobile phone baseband processor 2 receives the reference clock and supplies a first control signal a to the phone VCXO 3, which in turn supplies a clock signal to the phone radio 1. In the phone baseband processor 2 a comparison is made between the reference clock and the clock signal from the phone VCXO 3. If the clock signal generated by the phone VCXO 3 deviates from the reference clock by a certain amount, the frequency of the generated clock signal must be adjusted. The phone baseband processor orders a change in steps e.g. in fractions of 1 Hz, typically 0,7 Hz. One or more steps may be ordered at a time. The phone VCXO 3 may receive a digital signal directly from the phone baseband processor 2 or a digital/analog converter 4 converts the control signal a to an analog form suitable for the phone VCXO 3.

The phone VCXO 3 also supplies a clock signal to the GPS unit, which comprises an analog GPS receiver 5 and a digital GPS subprocessor 6. If the frequency of the clock signal is adjusted one step of 0,7 Hz, this is translated into 80 Hz in the GPS receiver, since it operates at 1,5 GHz. If this signal were used directly without any additional information about the actual frequency change, the GPS receiver would most probably loose the satellite signal and have to do a new time consuming search. Typically, it can take up to 10 seconds to recover the lost information.

According to the present invention, information about the frequency change is fed into the GPS chip set, e.g. the GPS receiver satellite signal acquisition and tracking loop. The information is sent by the phone baseband processor 2 as a second control signal b. The information should comprise time and magnitude of the frequency change. This will result in that the GPS algorithms directly can compensate for the anticipated frequency change and the satellite signal will not be lost.

By selecting suitable components and parameters, the first and second control signals a and b can be the same and supplied to the phone VCXO 3 and the GPS subprocessor 6.

In another embodiment, the GPS subprocessor is physically located in the baseband processor 2. In other words, the GPS unit shares the baseband processor which is programmed to perform the control of both the phone VCXO 3 and the GPS receiver 5. In this case, the control signal information will be sent internally in the phone baseband processor between the blocks controlling the phone VCXO and the GPS unit.

Conveniently, the frequency adjustment of the GPS radio unit is formed by means of a lookup table in which all possible GPS frequency adjustments are mapped to all possible control signals, so that the second control signal b is linked to the appropriate frequency adjustment of the GPS radio unit. This approach avoids computing of the various frequency adjustments of the GPS radio unit. A person skilled in the art will realise that the invention may be realised in various combinations of hardware and software. The scope of the invention is only limited by the claims below.

## Claims

1. A mobile telephone comprising:
a mobile telephone radio unit (1);
a voltage controlled oscillator (3) for generating a clock signal to the mobile telephone radio unit (1);
a baseband processor (2) arranged to extract a received clock reference from a base station of a mobile telephone system, to compare the received clock reference with the generated clock signal, and to generate a first control signal (a) to the voltage controlled oscillator (3) for adjusting the frequency thereof when the frequency of the generated clock signal deviates from the received clock reference by a certain amount;
a GPS radio unit (5, 6) adapted to receive the generated clock signal or a derivative of it as its clock reference, **characterised in that**
the baseband processor (2) is arranged to supply a second control signal (b) to the GPS radio unit (5, 6) containing information about any frequency adjustments, e.g. time and magnitude of any change.

2. A mobile telephone according to claim 1, **characterised in that** the second control signal (b) is a digital signal supplied to a subprocessor (6) of the GPS radio unit.

3. A mobile telephone according to claim 2, **characterised in that** the first control signal (a) is a digital signal identical with the second control signal (b).

4. A mobile telephone according to claim 3, **characterised in that** the first control signal (a) is supplied to the voltage controlled oscillator (3) via a digital/analog converter (4).

5. A mobile telephone according to claim 1, **characterised in that** the GPS radio unit (5) share the baseband processor (2) with the mobile telephone radio unit (1), and **in that** the second control signal is implemented as a software signal.

6. A mobile telephone according to any one of the preceding claims, **characterised in that** the frequency adjustment of the GPS radio unit (5, 6) is formed by means of a lookup table linking the second control signal (b) to the resulting frequency adjustment of the GPS radio unit (5, 6).

7. A method of controlling a GPS radio unit incorporated in a mobile telephone comprising:
a mobile telephone radio unit (1);
a voltage controlled oscillator (3);
a baseband processor (2);
wherein the GPS radio unit (5, 6) is adapted to receive the generated clock signal or a derivative of it as its clock reference, **characterised by** the steps of; extracting a received clock reference from a base station of a mobile telephone system,
generating a clock signal by means of the voltage controlled oscillator (3) and supplying the clock signal to the mobile telephone radio unit (1) and to the GPS radio unit (5, 6),
comparing the received clock reference with the generated clock signal, generating a first control signal (a) to the voltage controlled oscillator (3) for adjusting the frequency thereof when the frequency of the generated clock signal deviates from the received clock reference by a certain amount; and
supplying a second control signal (b) to the GPS radio unit (5, 6) containing information about any frequency adjustments, e.g. time and magnitude of any change.

8. A method according to claim 7, **characterised in that** the second control signal (b) is a digital signal supplied to a subprocessor (6) of the GPS radio unit.

9. A method according to claim 8, **characterised in that** the first control signal (a) is a digital signal identical with the second control signal (b).

10. A method according to claim 9, **characterised in that** the first control signal (a) is supplied to the voltage controlled oscillator (3) via a digital/analog converter (4).

11. A method according to claim 7, **characterised in that** the GPS radio unit (5) share the baseband processor with the mobile telephone radio unit (1), and **in that** the second control signal is implemented as a software signal.

12. A method according to any one of claims 7 to 11, **characterised in that** the frequency adjustment of the GPS radio unit (5, 6) is formed by means of a lookup table linking second control signal (b) to the resulting frequency adjustment of the GPS radio unit (5, 6).
